## Europäisches Patentamt
## European Patent Office
## Office européen des brevets

(19)

(11) Numéro de publication: **0 073 869**
**B1**

(12)

# FASCICULE DE BREVET EUROPEEN

(45) Date de publication du fascicule du brevet:
**27.12.85**

(51) Int. Cl.⁴: **H 04 B 3/23**

(21) Numéro de dépôt: **81430028.1**

(22) Date de dépôt: **08.09.81**

(54) **Dispositif de réception de données avec suppresseur d'écho d'écoute.**

(43) Date de publication de la demande:
**16.03.83 Bulletin 83/11**

(45) Mention de la délivrance du brevet:
**27.12.85 Bulletin 85/52**

(84) Etats contractants désignés:
**DE FR GB**

(56) Documents cités:
**FR - A - 2 277 470**

**IEEE TRANSACTIONS ON CONSUMER ELECTRONICS, vol. CE-27, no. 3, août 1981, NEW YORK (US), J.O. VOORMAN et al. "A one-chip automatic equalizer for echo reduction in Teletext", pages 512-529**
**IEEE TRANSACTIONS ON COMMUNICATIONS, vol. COM-25, no. 7, juillet 1977, NEW YORK (US), S.B. WEINSTEIN "A passband datadriven echo canceller for fullduplex transmission on two-wire circuits", pages 654-666**

(73) Titulaire: **International Business Machines Corporation, Old Orchard Road, Armonk, N.Y. 10504 (US)**
(84) Etats contractants désignés: **DE GB**

(73) Titulaire: **Compagnie IBM FRANCE, 5 Place Vendôme, F-75000 Paris 1er (FR)**
(84) Etats contractants désignés: **FR**

(72) Inventeur: **Godard, Dominique, Chemin du Moulin OPIO, F-06650 - Le Rouret (FR)**

(74) Mandataire: **Tubiana, Max, Compagnie IBM France Département de Propriété Industrielle, F-06610 La Gaude (FR)**

## Description

La présente invention concerne les systèmes de transmission de données numérique synchrones, et plus précisément un dispositif suppresseur d'échos pour un récepteur numérique destiné à de tels systèmes de transmission.

Dans les systèmes de transmission numériques synchrones la séquence de bits résultant du codage en numérique du signal à transmettre est tout d'abord convertie en une séquence de symboles de données. Ces symboles sont ensuite transmis sur un canal de transmission, l'un après l'autre à des instants régulièrement espacés d'un temps T, appelés instants de signalisation. La transmission se fait par modulation d'une onde porteuse de fréquence $f_c$, modulation qui consiste à faire correspondre à chaque symbole une valeur discrète de l'une ou plusieurs caractéristiques (amplitude, phase) de l'onde porteuse.

Vu le coût des canaux de transmission on réalise des transmission en duples en utilisant des lignes ne comportant que deux fils, alors qu'en principe quatre fils sont nécessaires dont deux pour l'émission et deux pour la réception. A chaque extrémité du système de transmission on retrouve bien les quatre fils. La conversion deux fils/quatre fils et réciproquement est réalisée à l'aide de coupleurs hybrides équilibrés dits transformateurs différentiels, qui, en principe séparent les voies émission des voies réception. Mais pour que cette fonction soit parfaitement exécutée, il faudrait que les transformateurs différentiels puissent être adaptés à l'impédance caractéristique du canal de transmission. En pratique, il y a toujours une désadaptation due au fait que l'impédance caractéristique du canal de transmission ne peut être connue qu'imparfaitement (surtout en réseau dit commuté) et varie dans le temps. Il en résulte des réinjections de signal par réflexions dues aux transformateurs différentiels. On parle alors d'échos. Il existe de nombreux types d'échos, dont l'écho dit découte. Il s'agit là de l'écho apparaissant dans le récepteur du terminal à l'écoute, écho provenant d'un signal transmis qui, après recirculation à travers le système de transmission, se rajoute avec un certain retard au signal reçu normalement. Ce qui caractérise cet écho, c'est non seulement son retard, mais aussi sa phase qui peut être variable dans le temps. Cet écho est donc particulièrement difficile à maîtriser.

Le brevet FR-A-2 277 470 propose un dispositif de centrage d'un filtre transversal d'un annuleur d'écho. Ce filtre qui est de type numérique et à coefficients réglables construit une réplique d'écho et la soustrait du signal transmis. Il y est précisé que pour synthétiser correctement la réponse impulsionnelle de chemin d'écho, il peut être avantageux de retarder convenablement les échantillons appliqués à l'annuleur d'écho. Ceci permet d'économiser sur la puissance de calcul nécessaire à la réalisation du filtre numérique.

Toutefois, le dispositif décrit s'applique à un écho sur une liaison classique avec conversion 2 fils/4 fils. Il s'agit d'un écho perçu par un locuteur et non de celui perçu par un récepteur. La réplique d'écho est soustraite du signal transmis.

La présente invention s'applique par contre à la correction d'un véritable écho d'écoute comme on le verra plus loin. En outre, on verra que dans le cadre d'une liaison de type à double bandes latérales-porteuses en quadrature, un certain nombre de problèmes spécifiques, notamment de phase, doivent être résolus.

La présente invention a pour objet un procédé numérique de suppression de l'écho d'écoute selon la revendication 1 et un dispositif suppresseur d'écho d'écoute selon la revendication 3, ainsi qu'un procédé d'initialisation du supresseur d'écho d'écoute utilisant le dispositif de la revendication 3.

L'invention permet la suppression de l'écho d'écoute dans un récepteur de données pourvu d'un égaliseur conventionnel et d'un circuit de symboles, en utilisant un dispositif à retard placé sur le trajet des symboles décodés, chargé de ramener l'écho à l'origine de référence du temps, puis en construisant à partir des symboles décodés retardés, une réplique d'écho, laquelle est ensuite, soustraite du signal reçu non décodé.

Figure 1: représente le schéma de principe d'une liaison par fils montrant notamment le trajet suivi par l'onde dite d'écho d'écoute.

Figure 1 B: représente un diagramme des réponses impulsionnelles des canaux à travers lesquels se propage l'onde reçue.

Figures 2 et 3:représentent des schémas du récepteur de données incorporant le dispositif de l'invention.

Figure 4: représente en détails une partie du dispositif de la figure 3.

Figures 5 et 6: représentent un mode de réalisation du dispositif (CALC KT) représenté sur la figure 3.

Figure 7: représente un mode de réalisation du dispositif (CALC COEF) représenté sur la figure 3.

Figure 8: représente un mode de réalisation du dispositif (CALC $\hat{\psi}_n$) représenté sur la figure 3.

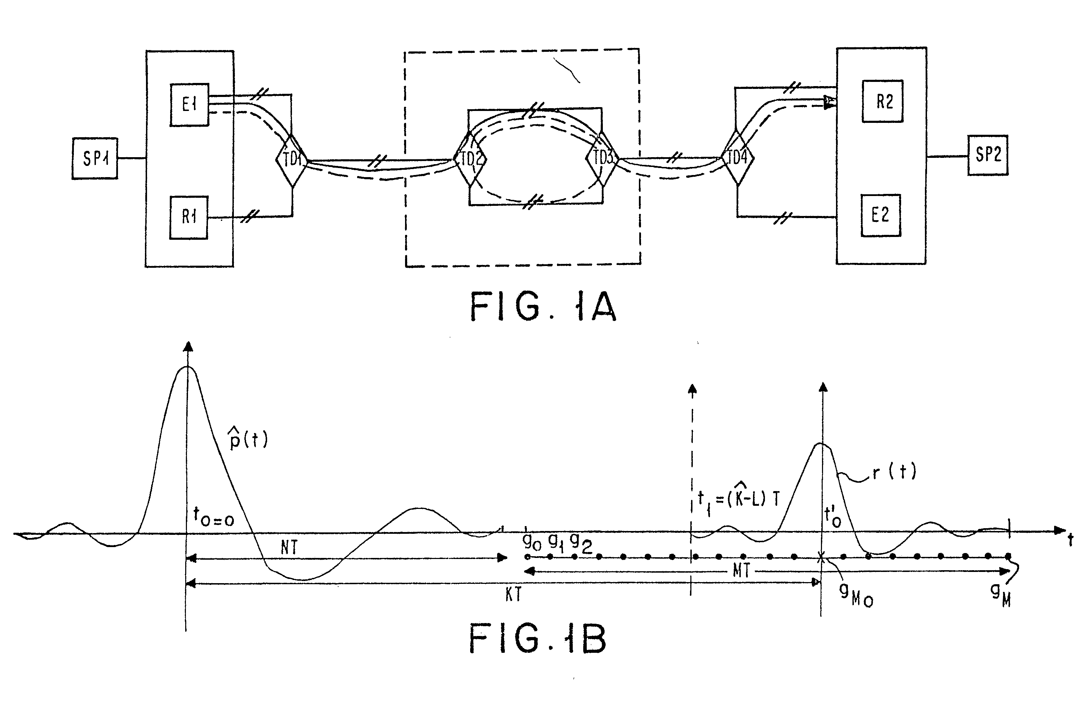

On a représenté sur la figure 1 A le schéma de principe d'une liaison par fils entre deux postes terminaux SP1 et SP2. On a désigné par E1, E2 et R1, R2, respectivement, les émetteurs et récepteurs mis à la disposition des terminaux SP1 et SP2. Une partie du parcours des informations transitant entre SP1 et SP2 passe par des lignes bifilaires. Mais la séparation et l'orientation des informations vers l'émetteur ou le récepteur concerné est réalisée à l'aide des transformateurs différentiels TD1 à TD4 permettant de convertir en certains endroits, la liaison sur deux fils en une liaison sur quatre fils et inversement (notamment pour pouvoir effectuer les amplifications nécessaires en ligne). En principe, une communication de SP 1 vers SP 2 passe par E 1, TD 1, TD 2, TD 3, TD 4 et R 2. En fait, à l'onde qui suivrait le trajet normal indiqué ci-dessus, viennent s'ajouter des ondes parasites telles que celle qui suivrait le trajet représenté en pointillés sur la figure 1. Par exemple, le signal émis par SP 1, après être normalement passé par TD 1, TD 2 et TD 3 peut, au lieu d'être injecté en totalité sur la ligne allant vers TD 4 être partiellement renvoyé vers TD 2, revenir sur TD 3, puis partir vers TD 4 et aboutir dans le récepteur destinataire R 2 avec un certain retard par rapport au signal reçu normalement.

En résumé, au signal normalement reçu par SP 2 et ayant parcouru un canal normal s'ajoutent des signaux parasites que l'on qualifie ici d'échos et plus précisément d'écho d'écoute qui auraient emprunté un canal dit d'écho. Cet écho perturbe considérablement l'écoute en SP 2. Il est d'autant plus difficile à éliminer qu'il peut présenter par rapport à l'onde reçue normalement, des dérives de phase variables dans le temps.

Avant de décrire le dispositif proposé ici pour poursuivre et supprimer l'écho d'écoute, il est nécessaire de replacer l'invention dans un contexte plus précis. Le signal provenant du terminal SP 1 est soumis à l'émetteur E 1 où il subit un certain nombre de transformations avant d'être transmis vers son destinataire SP 2. Cet émetteur, tout comme celui associé au terminal SP 2 utilise les techniques dites de modulation à double-bandes latérales porteuses en quadrature (DSB-QC). Le terme DSB-QC est utilisé ici au sens large incluant tous les systèmes dans lesquels le signal transmis peut être représenté par la superposition de deux porteuses en quadrature modulées en amplitude. Le terme DSB-QC inclut notamment la modulation par sauts de phase, la modulation par sauts de phase et d'amplitude combinés, et la modulation en quadrature.

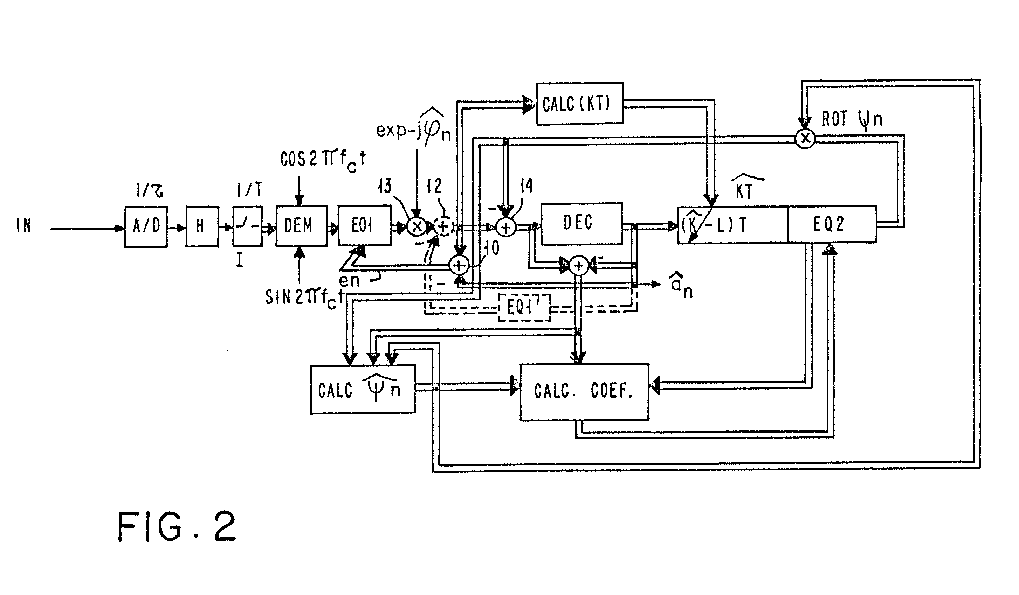

Comme on l'a indiqué plus haut, le signal transmis par E 1 parcourt à la fois un canal de transmission normal et un canal d'écho avant d'être reçu à l'entrée IN de récepteur R 2 destinataire représenté sur la figure 2. Cette figure 2 représente le schéma bloc d'un récepteur travaillant à 9600 bits par seconde (bps) conforme à l'Avis V 29 du CCITT, comportant des éléments conventionnels auxquels viennent s'ajouter les éléments permettant la mise en oeuvre de l'invention. Le signal porteur d'informations reçu en IN, dont l'énergie a été normalisée par un circuit de contrôle automatique de gain (non représenté) et qui a été filtré par un filtre passebande (non représenté) ayant rejeté le bruit hors bande, est appliqué à un dispositif d'échantillonnage et de codage en numérique A/D dans lequel il est échantillonné la cadence $1/\tau$. La cadence $1/\tau$ est choisie égale à un multiple m/T de la cadence dite de signalisation 1/T de façon à ce que l'on dispose à la sortie du dispositif A/D d'un nombre d'échantillons suffisant pour bien définir le signal reçu.

Les échantillons codés reçus sont appliqués à l'entrée d'un transformateur de Hilbert numérique (H).

Un transformateur de Hilbert est un filtre complexe qui a une entrée et deux sorties, sorties sur lesquelles on obtient respectivement les composantes orthogonales (composantes en phase et en quadrature) du signal appliqué à l'entrée. On trouvera un exemple de réalisation de ce dispositif dans l'article »Theory and Implementation of the Discrete Hilbert Transform«, paru dans »Digital Signal Processing«, de L. R. Rabiner et C. M. Rader, 1972, IEEE Press.

Les composantes en phase et en quadrature du signal reçu fourniers par le transformateur de Hilbert H sont ré-échantillonnées à la cadence de signalisation 1/T par des dispositifs d'échantillonnage représentés par un interrupteur I. Une horloge (non représentée) constituée par un oscillateur à verrouillage de phase numérique commande les dispositifs d'échantillonage A/D et I ainsi que les autres éléments du récepteur, à travers des lignes non représentées. Pour plus de précisions sur l'horloge, on pourra se reporter à la demande de brevet européenne No. 81101072.7 déposée le 16 février 1981.

Si on désigne par p (t) et r (t) respectivement, les réponses impulsionnelles équivalentes en bande de base du canal normal et du canal d'écho d'écoute, le signal reçu comporte un signal normal $x_1$ (t) défini par

$$x_1\,(t) = Re \sum_n a_n\,p\,(t{-}nT)\,exp\,j\,[2\,\pi f_c t + \varPhi\,(t)],$$

où

Re indique la partie réelle ou composante en phase (on désignera par Im la partie imaginaire), de l'expression qui suit,

$a_n$ désigne le symbole de données transmis à l'instant nT,

exp signifie que l'on considérera l'exponentielle de l'expression qui suit,

j $= \sqrt{-1}$, et

$\varPhi$(t) est une rotation de phase due au canal normal.

Au signal $x_1$ (t) vient s'ajouter l'écho d'écoute $x_2$ (t) tel que

$$x_2\,(t) = Re \sum_n a_{n-K}\,r\,(t{-}nT)\,exp\,j\,[2\,\pi f_c t + x\,(t)].$$

où

$x(t)$ est le déphasage dû au trajet de l'onde écho d'écoute, et
KT représente le retard de l'écho d'écoute.

Le signal reçu et porteur d'information sous forme de symboles de données peut donc s'écrire:

$$x(t) = Re \sum a_n\, p(t-nT)\, exp\, j\, [2\,\pi f_c t + \Phi(t)] + Re \sum_n a_{n-K}\, r(t-nT)\, exp\, j\, [2\,\pi f_c t + x(t)].$$

Les composantes en phase et en quadrature du signal reçu, disponibles sur les sorties respectives du dispositif d'échantillonnage I, sont appliquées aux entrées d'un démodulateur complexe DEM. Le démodulateur DEM reçoit d'une source locale (non représentée) une porteuse en phase de la forme $\cos 2\,\pi f_c nT$ et une porteuse en quadrature de la forme $2\,\pi f_c nT$. Le démodulateur DEM fournit les composantes en phase et en quadrature du signal reçu démodulé $y(t)$ lequel peut être exprimé sous sa forme complexe par l'expression ci-dessous.

$$y(t) = \sum_n a_n\, p(t-nT)\, exp\, j\, \Phi(t) + \sum_n a_{n-K}\, r(t-nT)\, exp\, jx(t) \qquad (1)$$

où:

$$\Phi(t) = \Phi_o + 2\,\pi \Delta f_s t \qquad (2)$$

$$x(t) = x_o + 2\,\pi \Delta f_e t \qquad (3)$$

$\Delta f_s$ et $\Delta f_e$ désignant respectivement les décalages en fréquences de l'onde normale et de l'onde d'écho.

Les composantes en phase et en quadrature du signal reçu démodulé sont appliquées aux entrées d'un égaliseur numérique complexe adaptatif EQ1 dont on trouvera un exemple de réalisation dans le brevet français No. 7 326 404 déposé par la demanderesse le 12 juillet 1973 et publié sous le No. 2 237 379. A noter que l'égaliseur EQ1 est pourvu d'un dispositif permettant d'ajuster automatiquement ses coefficients en se servant d'un signal d'erreur $e_n$ fourni par un soustracteur 10 et représentant l'écart entre les composantes du signal égalisé et celles du symbole de données $\hat{a}_n$*) fourni par un décodeur DEC (ou détecteur) dont on trouvera un mode de réalisation dans le brevet français No. 74 43560 déposé par la demanderesse le 27 décembre 1974 et publi sous le numéro 2 296 322. Pour montrer que l'invention s'applique quel que soit le type d'égaliseur utilisé, on a représenté en outre, en pointillés, sur la figure 2, un égaliseur récursif EQ'1 et un soustracteur 12 associé.

Les composantes en phase et en quadrature du signal égalisé sont respectivement appliquées aux entrées d'un circuit de réglage de phase de porteuse conventionnel 13, avant d'être envoyées sur le décodeur DEC ou circuit de décision chargé de déterminer le symbole de données reçu. Le circuit 13 fournit les composantes $Re\, z_n$ et $Im\, z_n$ du signal égalisé. Le reste des circuits de la figure 2 constitue le suppresseur d'écho d'écoute.

On a représenté sur la figure 1 B un diagramme des réponses impulsionnelles $p(t)$ et $r(t)$ des canaux à travers lesquels s'est propagée l'onde reçue. On peut penser à première vue à égaliser de manière conventionnelle le signal reçu en EQ1 pour l'ensemble du signal $y(t)$, écho d'écoute inclu. Il est évident que l'égaliseur unique utilisé alors serait relativement long, et donc nécessiterait une puissance de calcul importante ce qui en soi constituerait déjà un premier inconvénient. Mais en outre, lorsque les quantités $\Delta f_s$ et $\Delta f_e$ ne sont pas égales entre elles, l'égaliseur unique est inopérant pour la suppression de l'écho d'écoute. D'où l'utilité d'un systeme tel que celui de l'invention qui traite le signal égalisé (et décodé ou détecté comme on le verra plus loin) en introduisant dans le circuit du récepteur un dispositif à retard global chargé de ramener l'écho à l'origine de la référence du temps, et en construisant une réplique d'écho laquelle est alors soustraite du signal reçu non décodé.

Compte tenu de la présence de l'écho, le signal complexe traité par le décodeur est de la forme:

$$a_n + \sum a_{n-K-k}\, h_k\, exp\, j\, \psi_n + \omega_n \qquad (4)$$

où

$\omega_n$ représente la valeur à l'instant nT du bruit dû notamment à des restes d'interférences intersymboles; l'ensemble $\{h_k\}$ est composé des coefficients $h_k$ dérivés de la convolution discrète de $r(t)$ avec la réponse impulsionnelle de l'égaliseur EQ1; et $\psi_n$ est la valeur à l'instant nT de la dérive de

*) le signe »^« est utilisé tout au long de cette description pour distinguer entre valeur théorique exacte et valeur estimée (calculée).

4

phase ou rotation de phase, subie par l'écho découte après passage à travers l'égaliseur EQ 1 et le circuit de réglage de phase 13.

En première approximation on aurait:

$$\psi_n = \psi_0 + 2\pi (\Delta f_c - \Delta f_s)\, nT \tag{5}$$

Pour poursuivre et éliminer l'écho d'écoute, les composantes Re $\hat{a}_n$ et IM $\hat{a}_n$ du signal décodé fournies par le circuit de décision DEC sont transmises à travers un circuit à retard global kT, à un égaliseur d'écho d'écoute EQ 2 dont la sortie est soumise à une rotation de phase $\hat{\psi}_n$ en ROT $\hat{\psi}_n$ (voir figure 1 B et précisions données plus loin sur la signification des retards). La sortie de ROT $\psi_n$ qui représente une réplique $q_n$ du signal dû à l'écho est soustraite en 14 du signal $z_n$ de composantes Re $z_n$ et Im $z_n$. Ces mêmes composantes Re $z_n$ et Im $z_n$ sont envoyées à un circuit CALC (KT) qui mesure (estime) le retard de l'onde parasite d'écho par rapport à l'onde normale et permet donc d'ajuster le circuit à retard global estimé (KT). Ce circuit sert à ramener l'origine $t_0$ de référence de temps en $t'_0$. En outre, l'information sortant du circuit de décision DEC est soustraite en 16 de l'information entrant dans DEC, pour en déduire une information d'erreur sur les symboles de données détectés due à l'écho et désignée par le terme erreur d'écho $\varepsilon_n$, laquelle est envoyée à un circuit CALC COEF adaptateur de coefficients d'un second égaliseur dit égaliseur d'écho d'écoute EQ 2. Ce circuit calcule les coefficients de l'égaliseur d'echo EQ 2 et permet donc d'ajuster automatiquement ledit égaliseur d'écho. Enfin, un circuit de poursuite de phase d'écho CALC $\hat{\psi}_n$ permet de poursuivre la dérive de phase $\psi_n$ de l'écho à partir de la réplique d'écho $q_n$ ($q_n$ représentant plus précisément les valeurs discrètes d'une réplique d'écho »q« définie aux instants nT et de l'erreur d'écho $\varepsilon_n$). L'information sortant des CALC $\hat{\psi}_n$ sert à régler en ROT $\hat{\psi}_n$ la phase de l'écho d'écoute.

A noter que le circuit CALC $\hat{\psi}_n$ est pourvu d'une boucle de réaction. A noter aussi que l'information sortant du circuit CALC $\hat{\psi}_n$ est envoyée au circuit CALC COEF, lequel reçoit aussi des informations provenant de l'égaliseur d'échos EQ 2.

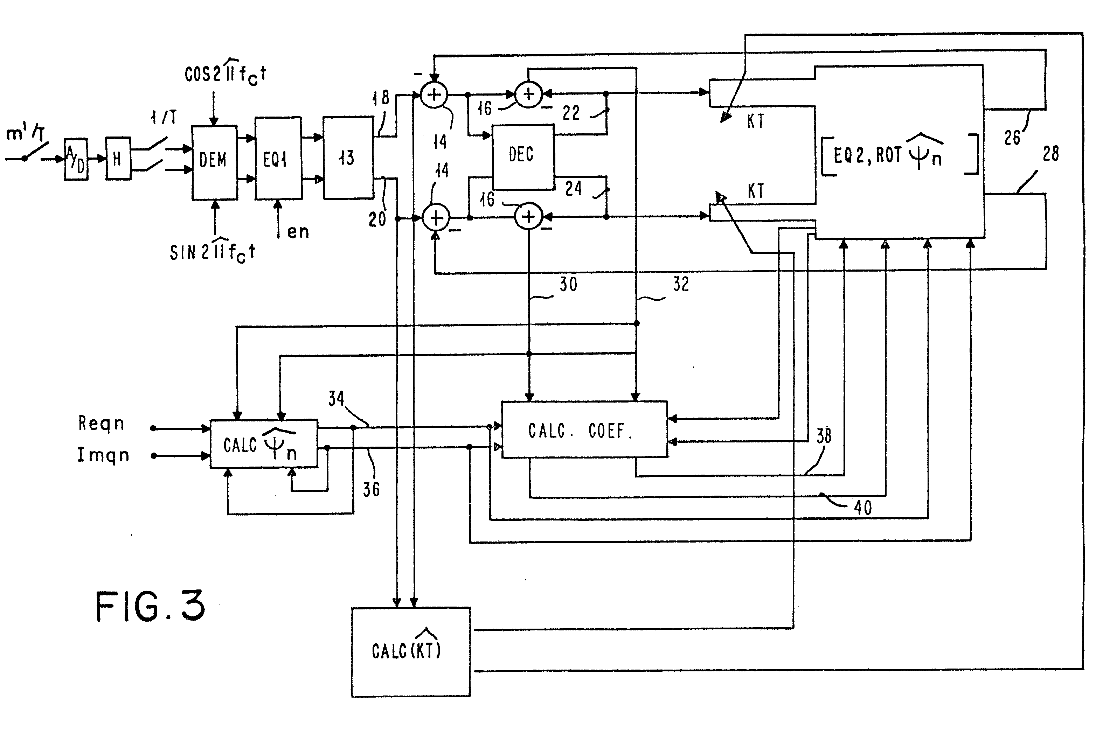

On a reproduit sur la figure 3, le schéma de la figure 2, en montrant plus précisément les séparations entre composantes réelles (en phase) et imaginaires (en quadrature) des différentes informations. Ceci explique que les soustracteurs 14 et 16 aient été représentés par deux soustracteurs chacun, un pour chaque composante. Pour la même raison, le circuit KT a été scindé en deux.

Du circuit de déphasage 13 sortent deux fils 18 et 20 véhiculant respectivement les composantes Re $z_n$ et Im $z_n$. De même, du circuit de décision DEC sortent Re $\hat{a}_n$ sur le fil 22 et Im $\hat{a}_n$ sur le fil 24. De l'ensemble égaliseur d'écho EQ 2 avec rotation de phase estimée $\hat{\psi}_n$ sortent les informations Re $q_n$ sur le fil 26 et IM $q_n$ sur le fil 28. Des soustracteurs 16 sortent les informations Im $\varepsilon_n$ (fil 30) et Re $\varepsilon_n$ (fil 32) composantes imaginaire et réelle de l'erreur $\varepsilon_n$.

Du dispositif de calcul de la phase estimée de l'écho CALC $\hat{\psi}_n$ sortent les composantes Re $\hat{\psi}_n$ (fil 34) et Im $\psi_n$ (fil 36). Enfin du dispositif de calcul de coefficients CALC COEF sortent les composantes Re $h_{l(n+1)}$ et Im $h_{l(n+1)}$ respectivement transmises sur les fils 38 et 40. Ce même dispositif CALC COEF reçoit en outre les informations Re $\hat{a}_{n-\hat{K}-l}$ et Im $\hat{a}_{n-\hat{K}-l}$ provenant de l'égaliseur d'échos EQ 2 et que l'on précisera ultérieurement.

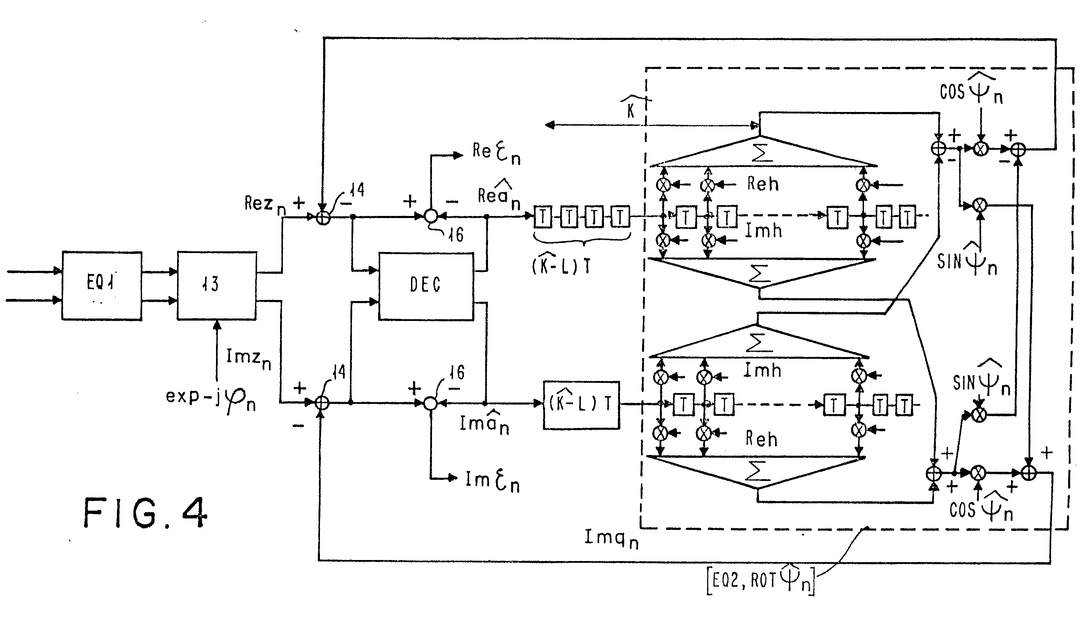

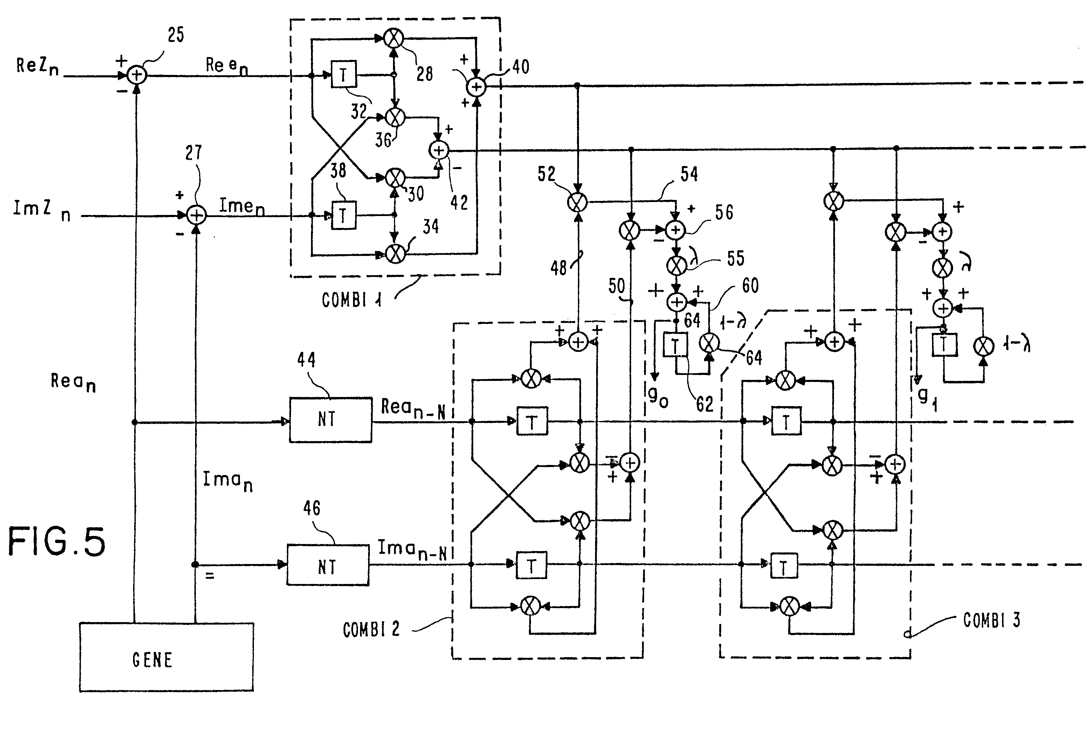

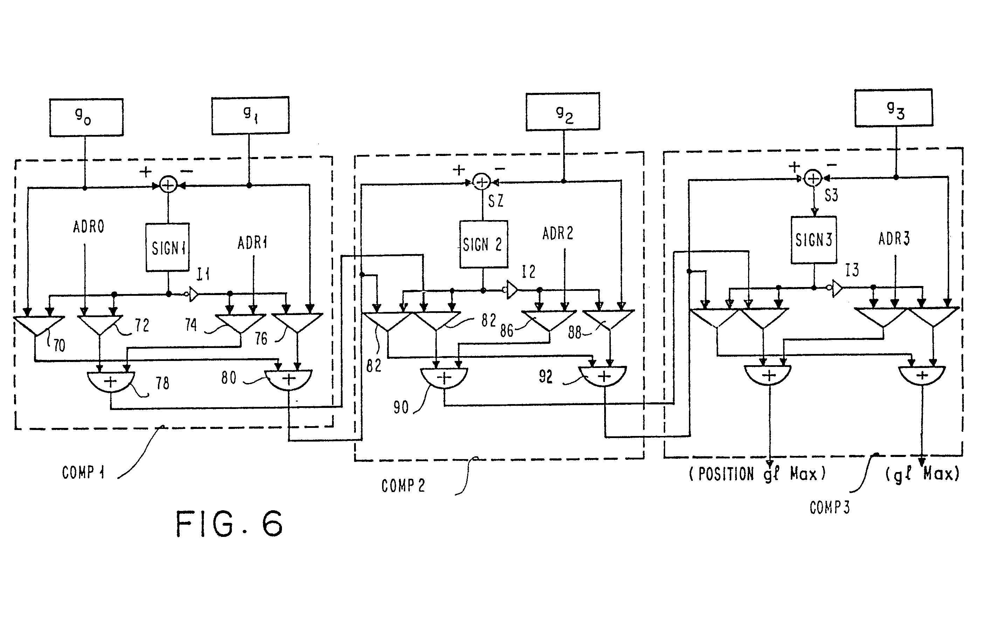

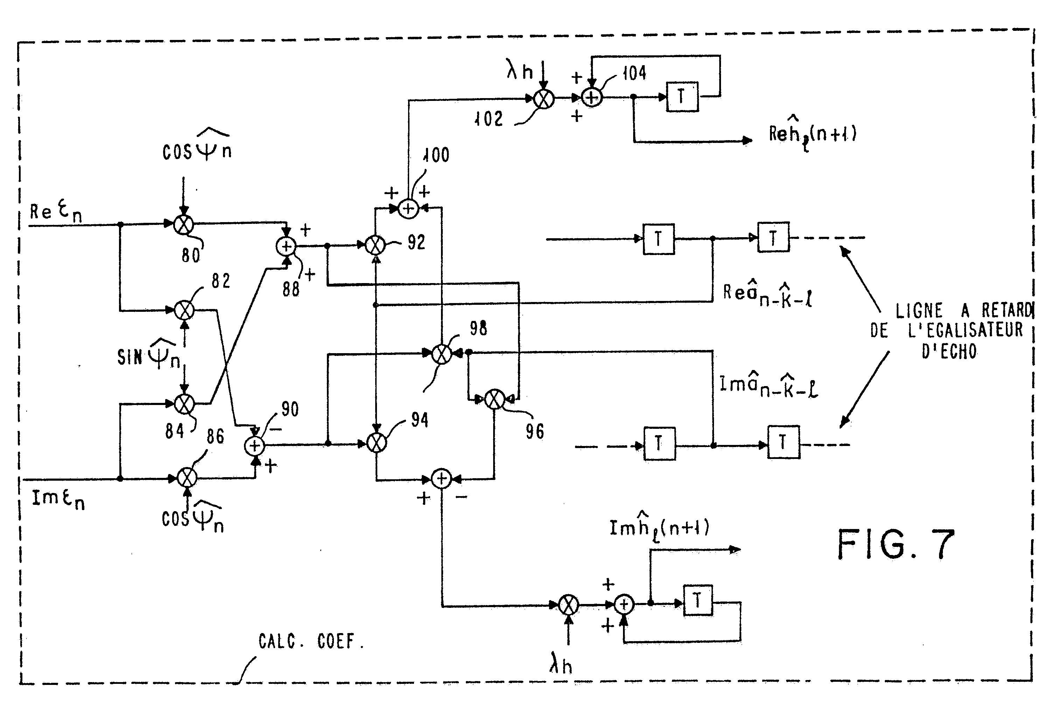

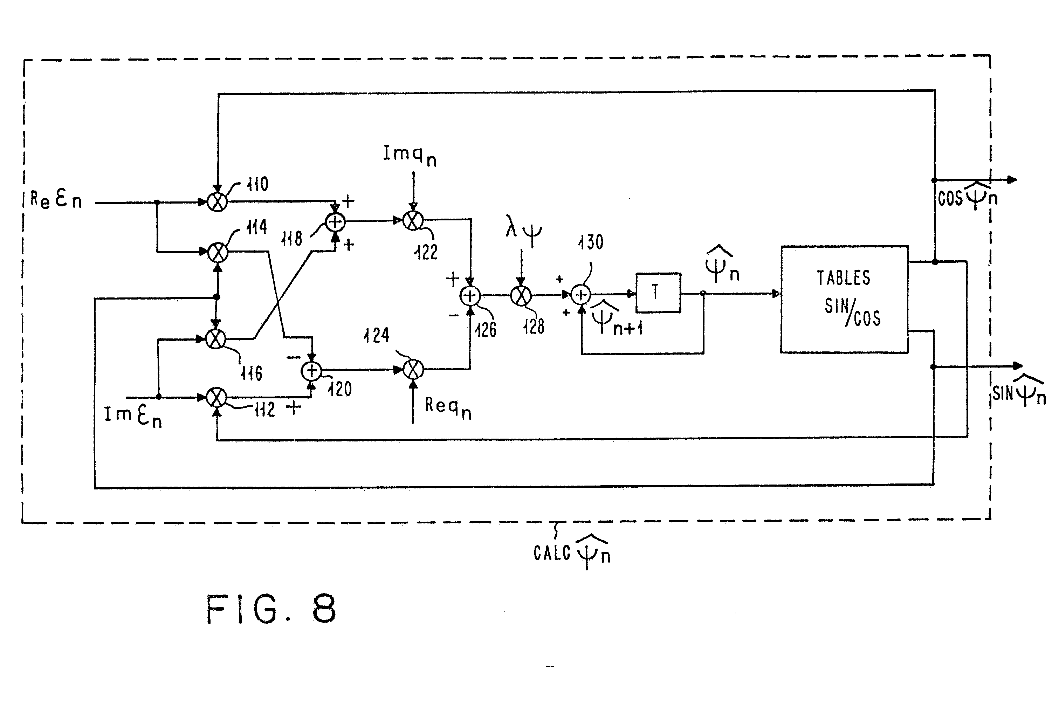

La figure 4 reprend une partie de la figure 3 et comporte une description détaillée d'un mode de réalisation de l'égaliseur d'échos EQ 2 et du dispositif de réglage de phase d'écho ROT $\hat{\psi}_n$. L'égaliseur d'écho EQ 2 est construit selon les principes connus et utilisés pour construire le filtre numérique complexe de l'égaliseur EQ 1. On trouvera une description d'un tel circuit dans la demande de brevet No. 7 326 404 déposée par la demanderesse le 12 juillet 1973 et publiée sous le No. 2 237 379. Ce filtre numérique comporte des circuits de multiplication par des coefficients h à ajuster dynamiquement. Cet ajustement est l'affaire du dispositif CALC COEF représenté sur la figure 7. Quant aux réglages de phase $\hat{\psi}_n$ opérés par des multiplications par cos $\hat{\psi}_n$ et sin $\hat{\psi}_n$ des informations sortant des filtres numériques de l'égaliseur d'écho EQ 2, ils nécessitent la poursuite de la phase $\psi_n$, poursuite qui est effectuée à l'aide du dispositif de la figure 8. Mais avant de procéder aux opérations destinées au réglage automatique de l'égaliseur d'écho et de la phase $\psi_n$, il faut ramener la réponse impulsionnelle de l'écho à l'origine de référence de l'échelle du temps et pour ce faire, il faut tout d'abord déterminer le retard global KT (figures 5 et 6) et régler le dispositif à retard désigné par KT sur les schémas des figures 2 et 3, lequel dispositif à retard compense donc le retard de l'onde du signal d'écho par rapport à l'onde du signal normal. En d'autres termes le circuit à retard global permet de ramener la référence de temps en $t'_0$. Ceci étant, l'égaliseur d'écho EQ 2 pourra agir directement sur l'écho d'ecoute et ce avec un minimum de coefficients.

Pour bien comprendre le fonctionnement du dispositif de l'invention il faut tout d'abord noter que les symboles de données étant non corrélés, on a:

$$E\, a_n^* \, a_{n-m} = 0, \ \forall_m \neq 0.$$

E     indique l'espérance mathématique,
*     indique la quantité complexe conjuguée,
$\forall_m$     signifie »quel que soit le nombre entier m«.

Et si, en outre on se place dans un système de symboles de données dont la représentation en coordonnées cartésiennes fournit une constellation présentant de nombreuses symétries,

$$E\ a_n^2 = 0. \tag{6}$$

On montre alors que:

$$E\ [e_n\ e_{n-1}^*\ a_{n-K-p}^*\ a_{n-K-p-1}] = (E\ |a_n|^2)^2\ |h_p|^2\ \exp\ j\ 2\ \pi(\varDelta f_e - \varDelta f_s)\,T \tag{7}$$

où

| | indique le module,

$h_p$ étant le $p^{\text{ieme}}$ coefficient de l'égaliseur EQ 2.

Pour $|\varDelta f_e - \varDelta f_s|$ allant jusqu'à environ 10 Hz, $\exp\ j\ 2\ \pi(\varDelta f_e - \varDelta f_s)\,T$ est peu différent de l'unité. De sorte que seule la partie réelle de l'expression (7) soit vraiment à retenir.

$$\text{Re}\ E\ [e_n\ e_{n-1}^*\ a_{n-K-p}^*\ a_{n-K-p-1}] \approx (E\ |a_n|^2)^2\ |h_p|^2. \tag{8}$$

En pratique, si on désigne par N le nombre de coefficients de l'égaliseur EQ 1' dans le cas où celui-ci est utilisé (égaliseur récursif) ou la différence exprimée en nombre de coefficients entre la longueur de l'égaliseur EQ 1 et le retard introduit par ce même EQ 1, si celui-ci est transversal, (en pratique on prendra alors N égal à la moitié du nombre de coefficients de EQ 1), on peut calculer les termes:

$$g_l = R_e\ E\ e_n\ e_{n-1}^*\ a_{n-N-l}^*\ a_{n-N-l-1} \tag{9}$$

pour $l = 0, 1, 2, \ldots, M_o, \ldots, M$, où M est un nombre entier que l'on s'est fixé de manière telle que N + M soit légèrement supérieur à K + L, 2 L + 1 étant le nombre de coefficients que l'on désire utiliser pour l'égaliseur d'écho EQ 2, compte tenu des techniques conventionnelles d'égalisation.

On peut calculer les $g_l$ de manière itérative à partir de la formule:

$$g_l(n+1) = (1-\lambda)\,g_l(n) + \lambda\,\text{Re}\ [e_n\ e_{n-1}^*\ a_{n-N-l}^*\ a_{n-N-l-1}]. \tag{10}$$

$\lambda$ peut être choisi égal à 0,002, l'énergie de l'impulsion p (t) étant normalisée à la valeur 1.

La détermination du délai $\hat{K}T$ de l'écho consiste alors à trouver la position du plus grand des $g_l$. C'est ce que font les circuits des figures 5 et 6 dont l'ensemble est contenu dans CALC (KT). Pour comprendre le fonctionnement du dispositif CALC (KT) on supposera tout d'abord que l'égaliseur EQ 1 et le dispositif 13 de réglage de phase de la porteuse ont été ajustés au préalable selon les méthodes conventionnelles du brevet précité (7 326 404) tandis que tous les coefficients de l'égaliseur d'écho EQ 2 sont mis à zéro. Le circuit de la figure 5 exécute alors les opérations de l'expression (10) pour calculer les coefficients $g_l$ à partir d'une séquence de symboles de données $a_n$ connue (dite séquence d'apprentissage) émise par l'émetteur et reçue par le récepter de la figure 2. Une réplique de cette séquence d'apprentissage est en outre stockée dans un générateur de séquences d'initialisation désignée par GENE (on pourrait aussi stocker dans GENE et utiliser les symboles fournis par le décodeur DEC durant la réception de la séquence d'apprentissage). Cette réplique fournit les deux composantes des symboles $a_n$, à savoir la composante Re $a_n$ soustraite en 25 de Re $z_n$ pour fournir Re $e_n$, et la composante Im $a_n$ soustraite en 27 de Im $z_n$ pour fournir Im $e_n$. La composante Re $e_n$ est envoyée simultanément à deux multiplicateurs 28 et 30 et à un circuit de retard T désigné par 32. La composante Im $e_n$ est elle aussi fournie à deux multiplicateurs 34 et 36 et à un circuit à retard 38. La sortie du multiplicateur 28 est ajoutée en 40 à la sortie du multiplicateur 34 pour fournir la partie réelle du produit $e_n \cdot e_{n-1}^*$. La sortie du multiplicateur 30 est soustraite en 42 de la sortie du multiplicateur 36 pour fournir la partie imaginaire du produit $e_n \cdot e_{n-1}^*$. L'ensemble comportant les deux cellules à retard 32 et 38, les multiplicateurs 28, 30, 34, 36, l'additionneur 40 et le soustracteur 42 a été désigné par COMBI 1. La sortie de l'additionneur 40 fournit la quantité:

$$\text{Re}\ e_n \cdot \text{Re}\ e_{n-1} + \text{Im}\ e_n \cdot \text{Im}\ e_{n-1} = \text{Re}\ [e_n \cdot e_n^* \cdot e_{n-1}^*].$$

De même, on obtient en sortie du soustracteur 42, la quantité:

$$\text{Re}\ e_{n-1} \cdot \text{Im}\ e_n - \text{Re}\ e_n \cdot \text{Im}\ e_{n-1} = \text{Im}\ [e_n \cdot e_{n-1}^*].$$

Les composantes Re $a_n$ et Im $a_n$ sont envoyées sur des circuits à retard NT désignés par 44 et 46 d'où sortent Re $e_{n-N}$ et Im $a_{n-N}$. Les sorties des circuits 44 et 46 sont connectées à un circuit COMBI 2 semblable à COMBI 2 et fournissant:

6

$$\mathrm{Re}\ a_{n-N} \cdot \mathrm{Re}\ a_{n-N-1} + \mathrm{Im}\ a_{n-N} \cdot \mathrm{Im}\ a_{n-N-1} = \mathrm{Re}\ [a_{n-N} \cdot a^*_{n-N-1}]$$

sur une sortie 48, et

$$\mathrm{Re}\ a_{n-N-1} \cdot \mathrm{Im}\ a_{n-N} - \mathrm{Re}\ a_{n-N} \cdot \mathrm{Im}\ a_{n-N-1} = \mathrm{Im}\ [a_{n-N} \cdot a^*_{n-N-1}]$$

sur une sortie 50.

Les sorties des circuits 40 et 42 sont respectivement multipliées en 52 et 54 aux quantités apparaissant sur les sorties 48 et 50 du circuit COMBI 2. Les sorties des multiplicateurs 52 et 54 sont soustraites l'une de l'autre en 56. Le circuit 56 fournit donc la quantite:

$$\mathrm{Re}\ e_n\ e^*_{n-1}\ a^*_{n-N}\ a_{n-N-1}. \tag{11}$$

Cette quantité est multipliée par $\lambda$ en 58. La sortie du multiplicateur 58 passe par un additionneur 60 dont la sortie est retardée d'une période de signalisation T en 62. La sortie de 62 est multipliée par $1-\lambda$ en 64. La sortie de 64 est envoyée à l'additionneur 60. On obtient donc en sortie de l'additionneur 60, la quantité:

$$g_o\ (n+1) = (1-\lambda)\ g_o\ (n) + \lambda\ \mathrm{Re}\ [e_n \cdot e^*_{n-1} \cdot a^*_{n-N} \cdot a_{n-N-1}]. \tag{12}$$

Le circuit effectant les opérations (12) réalise donc la fonction (10) pour $l = 0$.

En utilisant une autre cellule (COMBI 3) et des circuits associés semblables à ceux que l'on vient de décrire, le tout connecte selon le schéma de la figure 5, on obtient:

$$g_1\ (n+1) = (1-\lambda)\ g_1\ (n) + \lambda\ \mathrm{Re}\ [e_n \cdot e^*_{n-1} \cdot e^*_{n-N-1} \cdot a_{n-N-2}]. \tag{13}$$

En procédant de manière semblable, on obtient $g_2$, $g_3$, etc., donc les termes $g_l$ pour $l = 0, 1, 2, \ldots,$ $M_o, \ldots, M$. Ces quantités $g_l$ vont servir à determiner le retard global KT de l'écho d'ecoute. Pour ce faire, on doit tout d'abord déterminer la position de plus grand $gM_o$ des coefficients $g_l$. Cette position peut être déterminée par une opération de tri quelconque, ou en utilisant le circuit de la figure 6. Dans ce cas, les termes $g_o$, $g_1$, $g_2$, $g_3$ (on s'est limité ici à quatre termes uniquement pour simplifier les explications) sont mis en mémoire à des adresses séquentielles ADR 0, ADR 1, ADR 2 et ADR 3 respectivement. Les valeurs $g_o$ et $g_1$ ainsi que leurs adresses sont soumises à un premier étage de comparaison COMP 1. Pour cela la valeur de $g_l$ est soustraite de celle de $g_o$ en S 1. Le signe de la différence est déterminée en SIGN 1. Ce signe contrôle l'ouverture de portes logiques 70 et 72, tandis que son inverse (fourni par un inverseur I 1) contrôle l'ouverture des portes 74 et 76.

Les portes 70 et 76 reçoivent respectivement sur leurs entrées de données les valeurs de $g_o$ et $g_1$, tandis que les portes 72 et 74 reçoivent respectivement les adresses ADR 0 et ADR 1. Les sorties des portes 72 et 74 sont envoyées à un circuit OU logique 78. Le sorties des portes 70 et 76 sont envoyées à un circuit OU logique 80. La sortie du circuit 80 indique donc la valeur de g la plus grande entre $g_o$ et $g_1$, valeur dont l'adresse est fournie par le circuit 78. La sortie du circuit 80 est envoyée sur l'entrée (+) d'un soustracteur S 2 dont l'entrée (−) reçoit $g_2$. Cette même sortie du circuit 80 est envoyée sur l'entrée d'une porte 82, tandis que la sortie du circuit 78 est envoyée sur l'entrée d'une porte 84. Les portes 82 et 84 appartiennent à un second étage de comparaison COMP 2 semblable à COMP 1 et comparant $g_2$ à la plus grande valeur entre $g_o$ et $g_1$, et ADR 2 à l'adresse de ladite plus grande valeur. Les sorties de COMP 2 sont envoyées sur un troisième étage de comparaison COMP 3 recevant par ailleurs $g_3$ et son adresse ADR 3. On obtient ainsi en sortie de COMP 3, la valeur $gM_o$ du $g_l$ le plus grand et sa position (adresse). La dite position détermine la position relative ($M_o$) du coefficient central de l'égaliseur d'écho EQ 2.

La valeur estimée du coefficient $\hat{K}$ peut alors être déterminée à partir de la formule:

$$\hat{K} = N + M_o + 1. \tag{14}$$

Une fois $\hat{K}$ connu, on régle les dispositifs de retard global $\hat{K}$T. En pratique, comme le montre la figure 4, un certain nombre de cellules à retard T a été prévu sur le trajet des symboles détectés $\hat{a}_n$ en amont de l'égaliseur d'écho EQ 2. De plus, comme on l'a indiqué plus haut durant la période de calcul des $g_l$, les coefficients de l'égaliseur d'écho EQ 2 sont à zéro. Une fois le plus grand des $g_l$ (soit $gM_o$) localisé sur la ligne à retard formée d'éléments T placés sur le trajet des symboles détectés $\hat{a}_n$, on positionne l'égaliseur EQ 2 de manière telle que son coefficient central soit placé en $M_o$, c'est-à-dire sur la K$^{\mathrm{ième}}$ cellule de la ligne à retard placée sur le trajet des symboles de données détectés. On a ainsi ramené l'origine de référence du temps en $t'_o$ pour l'égaliseur d'écho EQ 2.

Une fois réglé le dispositif à retard global KT, l'égaliseur suppresseur d'écho est mis en fonction pour construire une réplique $q_n$ de l'écho, telle que:

$$q_n = \sum_{l=-L}^{L} a_{n-\hat{K}-l} \, \hat{h}_l \, \exp j \, \hat{\psi}_n. \qquad (15)$$

Les composantes Re $q_n$ et Im $q_n$ de cette réplique sont soustraites en 14 des composantes Re $z_n$ et Im $z_n$ respectivement. Les sorties des soustracteurs 14 sont envoyées aux entrées (+) de soustracteurs 16 dont les entrées (−) reçoivent les quantités Re $\hat{a}_n$ et Im $\hat{a}_n$. Les sorties des soustracteurs 16 fournissent les composantes du signal d'erreur $\varepsilon_n$, lequel est utilisé pour ajuster les coefficients estimés $\hat{h}_l$ de l'égaliseur d'écho EQ 2 (où l représente maintenant le rang du coefficient considéré dans l'égaliseur d'écho), ainsi que la phase $\hat{\psi}_n$. Les quantités $\hat{h}_l$ et $\hat{\psi}_n$ sont déterminées à partir des gradients de $E|\varepsilon_n|^2$ par rapport à $\hat{h}_l$ et $\hat{\psi}_n$. Ces quantités $\hat{h}_l$ et $\hat{\psi}_n$ obéissent aux relations:

$$\hat{h}_l(n+1) = \hat{h}_l(n) + \lambda_h \, \varepsilon_n \, \exp -j \, \hat{\psi}_n \, \hat{a}_{n-\hat{K}-l} \qquad (16)$$

$$\hat{\psi}_{(n+1)} = \hat{\psi}_n + \lambda_\psi \, \mathrm{Im} \, q_n^* \, \exp -j \, \hat{\psi}_n \qquad (17)$$

où

$\lambda_h$ et $\lambda_\psi$ sont des coefficients positifs fixes prédéterminés. Ces coefficients sont obtenus en faisant des compromis pour que les opérations des expressions (16) et (17) convergent suffisamment vite. Si ces coefficients sont choisis trop grands, les expressions (16) et (17) divergent, s'ils sont choisis trop petits ces mêmes expressions convergent mais trop lentement.

En pratique on prend:

$$\lambda_h \leftarrow \frac{1}{N2 \cdot E|a_n|^2} \simeq 1/4 \left( \frac{1}{N2 \cdot E|a_n|^2} \right)$$

où

on désigne par N2 le nombre de coefficients de l'égaliseur d'écho EQ 2.

$$\lambda_\psi \leftarrow \frac{1}{E|\varepsilon_n|^2} \simeq 1/4 \, \frac{1}{E|\varepsilon_n|^2}.$$

Le circuit de la figure 7 réalise l'ajustement des coefficients $\hat{h}$ de l'égaliseur d'écho EQ 2 en effectuant les opérations de la formule (16) après initialisation des coefficients de EQ 2 selon les méthodes classiques d'égalisation numérique. La composante Re $\varepsilon_n$ est multipliée par cos $\hat{\psi}_n$ en 80 et par sin $\hat{\psi}_n$ en 82, tandis que la composante Im $\varepsilon_n$ est multipliée par sin $\hat{\psi}_n$ en 84 et par cos $\hat{\psi}_n$ en 86. Le sorties des multiplicateurs 80 et 84 sont additionnées en 88, tandis que les sorties des multiplicateurs 82 et 86 sont soustraites l'une de l'autre en 90. Les sorties des circuits 88 et 90 sont multipliées par Re $\hat{a}_{n-\hat{K}-l}$ (pris sur la $l^{ième}$ cellule de la section de ligne à retard de la partie de l'égaliseur EQ 2 recevant sur son entrée la composante Re $\hat{a}_{n-K}$) en 92 et 94. Ces mêmes sorties des circuits 88 et 90 sont multipliées par Im $\hat{a}_{n-\hat{K}-l}$ en 96 et 98 respectivement. Les sorties de 92 et 98 sont additionnées en 100. La sortie de 100 est multipliée par $\lambda_h$ en 102. On obtient ainsi en sortie de 102, la quantité:

$$\mathrm{Re} \, [\lambda_h \, \varepsilon_n \, \exp -j \, \hat{\psi}_n \, \hat{a}_{n-\hat{k}-l}]. \qquad (18)$$

A la quantité définie par 18 en sortant du multiplicateur 102, on ajoute en 104, la quantité $h_{l(n)}$, pour obtenir la quantité $h_{l(n+1)}$ en sortie de 104.

En opérant de façon semblable à celle décrite ci-dessus, la partie inférieure du circuit de la figure 7 fournit la quantité Im $h_{l(n+1)}$.

Le circuit de la figure 8 détermine les quantités sin $\hat{\psi}_n$ et cos $\hat{\psi}_n$. Les composantes Re $\varepsilon_n$ et Im $\varepsilon_n$ sont multipliées par cos $\hat{\psi}_n$ en 100 et 112 et par sin $\hat{\psi}_n$ en 114 et 116. Les sorties de 110 et 116 sont additionnées en 118 et soustraites l'une de l'autre en 120. Les sorties de 118 et 120 sont multipliées par Im $q_n$ en 122 et Re $q_n$ en 124 respectivement. Les sorties de 122 et 124 sont soustraites l'une de l'autre en 126. La sortie de 126 est multipliée par $\lambda_\psi$ en 128. La sortie du multiplicateur 128 est envoyée sur une entrée d'un additionneur 130 dont la seconde entrée reçoit le terme $\hat{\psi}_n$ fourni par l'additionneur 130, un instant T auparavant. Le terme $\hat{\psi}_n$ est utilisé pour adresser une table de sin et cos de type conventionnel, laquelle table fournit donc les quantités sin $\hat{\psi}_n$ et cos $\hat{\psi}_n$. Ces termes sont utilisés en sortie du dispositif de la figure 4 pour corriger la phase des signaux sortant de l'égaliseur d'écho EQ 2.

En résumé, la procédure de poursuite de l'écho d'écoute selon l'invention comporte une période d'initialisation comprenant une phase au cours de laquelle le suppresseur d'écho est déconnecté, notamment par mise à zéro des coefficients de l'égaliseur d'écho EQ 2. L'émetteur envoie la séquence de symboles de données d'apprentissage, laquelle séquence sert une fois reçue, au réglage de l'égaliseur du récepteur EQ 1. La séquence d'apprentissage que l'émetteur continue à émettre, est ensuite utilisée pour la détermination du retard global KT de l'écho par tri des coefficient $g_l$ définis

l'expression (10) et localisation du coefficient $g_l$ le plus grand pour $0 < l < M$, M étant un nombre prédéterminé. Une fois $\hat{K}T$ connu, il est utilisé pour ramener l'origine de référence de l'échelle du temps au niveau de la réponse impulsionnelle de l'écho par introduction d'un retard global $\hat{K}T$ sur le trajet des symboles de la séquence d'apprentissafe décodée. (Ce retard est conservé constant tant que la liaison émetteur-récepteur reste stable). Puis la séquence d'apprentissage est utilisée pour engendrer une réplique de l'écho d'écoute, laquelle réplique est soustraite du signal égalisé par EQ1. Ladite réplique d'écho est construite à l'aide d'un égaliseur automatique d'écho agissant sur les symboles de données décodés, et opérant en outre un réglage automatique de la phase d'écho d'écoute. Les réglages automatiques de l'égaliseur d'écho et de sa phase nécessitent notamment la poursuite dudit écho d'écoute, et sont effectués par les opérations représentées par les expressions mathématiques (16) et (17).

Bien que l'on ait décrit dans ce qui précède et représenté sur les dessins les caractéristiques essentielles de l'invention, appliquées à un mode de réalisation préféré de l'invention, il est évident que l'homme de l'art peut y apporter toutes modifications de forme ou de détail qu'il juge utiles, sans pour autant sortir du cadre de ladite invention. Il peut notamment choisir un égaliseur EQ2 non symétrique, c'est-à-dire ayant une ligne à retard de longueur L1 différente de $2L+1$ et modifier en conséquence les limites de »l« des expression (15) et suivantes.

## Revendications

1. Procédé numérique de suppression de l'écho d'écoute apparaissant dans un récepteur chargé de détecter des symboles de données $a_n$ transmis à intervalle régulier T en utilisant les techniques de modulation dites à double-bandes latérales pourteuses en quadrature, ledit écho d'écoute se présentant à l'entrée dudit récepteur sous la forme d'une onde parasite retardée et ayant subi, une dérive de phase $\psi$ variable par rapport à l'onde normalement reçue sans écho d'écoute, ledit procédé comportant:

l'estimation du retard global $\hat{K}T$ (voir CALC ($\hat{K}T$)) entre les ondes normale et parasite;

l'introduction d'un retard équivalent (KT fig. 3) audit retard global estimé sur le trajet des données détéctées par ledit récepteur;

la génération des valeurs discrètes $q_n$ d'une réplique d'écho »q« définie aux instants nT, à partir des symboles de données détectés retardés dudit retard global; et,

la soustraction (14) de ladite réplique d'écho de l'onde reçue avant détection; ledit procédé étant caractérisé en ce que ladite réplique d'écho obéit à la relation:

$$q_n = \sum_{l=-L}^{L} a_{n-\hat{K}-l} \, \hat{h}_l \, \exp j \, \hat{\psi}_n,$$

où

le signe »^« indique qu'il s'agit de valeurs estimées,

L est une valeur entière prédéterminée,
j $= \sqrt{-1}$,
$h_l$ représente un coefficient obéissant à la relation

$$\hat{h}_{l(n+1)} = \hat{h}_{l(n)} + \lambda_h \, \varepsilon_n \, \exp -j \, \hat{\psi}_n \, \hat{a}_{n-\hat{K}-l},$$

où

$\lambda_h$ est un coefficient numérique prédéterminé,
$\varepsilon_n$ représente la valeur à l'instant nT de l'erreur sur les symboles de données, erreur due à l'écho d'écoute; et, où,
$\hat{\psi}_n$ représente les valeurs discrètes prises aux instants nT par la dérive de phase $\psi$ et qui est opérée par calcul itératif obéissant à la relation:

$$\hat{\psi}_{(n+1)} = \hat{\psi}_n + \lambda_\psi \, \text{Im} \, q_n^{*} \, \exp -j \, \hat{\psi}_n$$

où

$\lambda_\psi$ est un coefficient numérique prédéterminé,
Im indique que l'on considère uniquement la partie imaginaire de la quantité complexe qui suit,
* signifie que l'on traite la quantité complexe conjuguée de celle considérée.

2. Procédé numérique de suppression d'écho d'écoute selon la revendication 1 caractérisé en ce que ladite génération des valeurs discrètes $q_n$ de l'écho d'écoute est réalisée en utilisant les techniques d'égalisation numérique complexe.

3. Dispositif suppresseur d'écho d'écoute pour récepteur de données transmises à intervalles réguliers T sous forme de symboles numériques de données $a_n$ en utilisant les techniques de modulation dites à double-bandes latérales porteuses en quadrature, ledit récepteur comportant des moyens d'échantillonnage et de codage en numérique (A/D, I) du signal reçu, des moyens de filtrage complexe (H) reliés auy moyens d'échantillonnage et scindant le signal reçu codé en une composante normale et une composante en quadrature, des moyens de démodulation (DEM) reliés aux moyens de filtrage complexe, des premiers moyens d'égalisation (EQ1, 13) et de correction en phase du signal démodulé et des moyens dits de décision (DEC) traitant le signal ayant subi ladite première égalisation pour en déduire les symboles numériques reçus, ledit suppresseur d'écho d'écoute étant destiné à supprimer les effets d'une onde parasite dite d'écho d'écoute présentant par rapport à l'onde normale reçue un retard et une rotation de phase, ledit suppresseur d'écho d'écoute comportant:

des moyens d'estimation du retard global KT (CALC ($\hat{K}$T)) entre l'onde normale et l'onde d'écho d'écoute, lesdits moyens d'estimation de retard global étant reliés auxdits premiers moyens d'égalisation:

des circuits à retard global (KT) reliés auxdits moyens de décision et réglés à l'aide desdits moyens d'estimation de retard global;

des moyens de génération des échantillons $q_n$ d'une réplique numérique q de l'écho d'écoute (EQ2, ROT $\hat{\psi}_n$), reliés auxdits circuits à retard global;

des moyens de soustraction reliés auxdits moyens de génération de réplique d'écho pour soustraire ladite réplique d'écho du signal se présentant à l'entrée desdits moyens de décision;

ledit dispositif suppresseur d'écho étant caractérisé en outre en ce qu'il comporte des moyens de poursuite de phase d'écho (CALC $\hat{\psi}_n$) reliés aux dits moyens de décision et destinés à mesurer la rotation de phase $\psi$ subie par les symboles de données détectés par les moyens de décision, et en ce que lesdits moyens de génération de réplique comportant un second égaliseur (EQ2) de coefficients $h_l$ et des circuits de rotation de phase d'écho (ROT $\hat{\psi}_n$), tels que la réplique d'écho obéit à la relation:

$$q_n = \sum_{l=-L}^{L} a_{n-\hat{K}-l} \, \hat{h}_l \, \exp j \, \hat{\psi}_n,$$

où

le signe » ^ « indique qu'il s'agit de valeurs estimées,

$j \quad = \sqrt{-1}$,

$L \quad$ est une valeur entière prédéterminée,

$\hat{h}_l \quad$ représente la valeur du coefficient de rang l dudit second égaliseur, dit aussi égaliseur d'écho, valeur estimée à l'instant nT, selon l'expression:

$$\hat{h}_{l(n+1)} = \hat{h}_{l(n)} + \lambda_h \, \varepsilon_n \, \exp -j \, \hat{\psi}_n \, \hat{a}_{n-\hat{K}-l}$$

où

$\lambda_h \quad$ est un coefficient numérique prédéterminé, et

$\varepsilon_n \quad$ représente la valeur à l'instant nT de l'erreur sur les symboles de données, erreur due à l'écho d'écoute, et

$\hat{\psi}_n \quad$ représente la valeurs de la dérive de phase subie par les symboles de données due à l'écho d'écoute, valeur mesurée à l'instant nT et obéissant à la relation:

$$\hat{\psi}_{(n+1)} = \hat{\psi}_n + \lambda_{\psi} \, \text{Im} \, q_n^* \, \exp -j \, \hat{\psi}_n$$

où

$\lambda_{\psi} \quad$ est un coefficient numérique prédéterminé,

Im indique que l'on considère uniquement la partie imaginaire de la quantité complexe qui suit, et

* signifie que l'on traite la quantité complexe conjuguée de celle considérée.

4. Procédé d'initialisation de suppresseur d'écho d'écoute utilisant le dispositif de la revendication 3 et caractérisé en ce qu'il comporte les opérations suivantes:

réception d'une séquence de symboles de données d'apprentissage destinée au réglage dudit premier égaliseur après avoir déconnecté le dispositif suppresseur d'écho d'écoute,

connnexion du dispositif d'écho d'ecoute avec mise à zéro des coefficients dudit second égaliseur, mesure du retard global KT sur la réception d'une suite de ladite séquence de symboles de données d'apprentissage,

réglage du circuit de retard global à la valeur KT mesurée, et

réglage dudit second égaliseur ainsi que du circuit de rotation de phase d'écho à partir de ladite séquence de symboles de données d'apprentissage.

5. Procédé d'initialisation du suppresseur d'écho d'écoute selon la revendication 4 caractérisé en ce que ladite mesure du retard global KT comporte les opérations suivantes:

détermination de termes $g_l$ définis par:

$$g_{l(n+1)} = (1-\lambda)\, g_{l(n)} + \lambda\, \mathrm{Re}\, [e_n\, e_{n-1}^*\, a_{n-N-l}^*\, a_{n-N-l-1}]$$

pour $l = 0, 1, 2, ..., M_o, ..., M$, où M est un nombre entier prédéterminé; et

où

$\lambda$    est un coefficient prédéterminé,

Re    indique que l'on ne retient que la partie réelle de l'expression sui suit,

$e_n$    est la valeur à l'instant nT de l'erreur représentant l'écart entre le signal égalisé par ledit premier égaliseur et le symbole de données $a_n$ détecté,

*    indique que l'on traite la quantité complexe conjuguée de celle à laquelle s'applique ce signe,

localisation du terme $g_{M_o}$ le plus grand parmi les termes $g_l$ déterminés; et
détermination de la quantité

$$K = N + M_o + 1$$

ou

N    est une valeur prédéterminée en fonction des caractéristiques desdits premiers moyens d'égalisation.

6. Procédé d'initialisation du suppresseur d'écho selon la revendication 5 caractérisé en ce que ledit réglage du second égaliseur comporte les opérations suivantes:

positionnement du coefficient central dudit second égaliseur sur la $K^{\text{ième}}$ cellule de la ligne à retard placée sur le trajet des symboles de données détectés; et réglage des coefficients $\hat{h}_l$ dudit second égaliseur conformément à l'expression:

$$\hat{h}_{l(n+1)} = \hat{h}_{l(n)} + \lambda_h\, \varepsilon_n\, \exp -j\, \hat{\psi}_n\, a_{n-\hat{K}-l}$$

où

$\lambda_h$    est un coefficient numérique prédéterminé,

$\hat{a}_{n-\hat{K}-l}$    est la valeur du symbole de données détecté à l'instant $(n-\hat{K}-l)\,T$,

$\hat{\psi}_n$    est la dérive de phase estimée subie par les symboles de données à l'instant nT et due à l'écho d'écoute, et

$\varepsilon_n$    représente la valeur à l'instant nT de l'erreur sur les symboles de données, erreur due à l'écho d'écoute.

## Patentansprüche

1. Numerisches Verfahren zur Unterdrückung des hörseitigen Echos bei einem Hörempfänger zur Ermittlung der Datensymbole $a_n$, die in regelmäßigen Zeitabständen T unter Anwendung der »Zweiseitenband-Modulation mit Quadraturträger« genannten Modulationstechniken übertragen werden, wobei das hörseitige Echo als eine parasitäre verzögerte Welle am Eingang des Hörempfängers anliegt, welche Welle einen in Abhängigkeit von der normalerweise empfangenen Welle ohne hörseitigem Echo veränderlichen Phasenschub $\psi$ erfahren hat, wobei das Verfahren die folgenden Schritte einschließt:

Abschätzung der Gesamtverzögerung $\hat{K}T$ (Siehe CALC ($\hat{K}T$)) zwischen der normalen Welle und der parasitären Welle;

Zusatz einer Verzögerung (KT, Fig. 3), die der Gesamtverzögerung entspricht, die auf dem Übertragungsweg der von dem Hörempfänger ermittelten Daten abgeschätzt ist;

Generierung von diskreten Werten $q_n$ für einen in den Zeitpunkten nT bestimmten Echo-Abdruck »q«, ab den ermittelten, durch die Gesamtverzögerung verzögerten Datensymbolen; und Subtrahierung (14) des Echo Abdrucks der empfangenen Welle vor der Ermittlung; wobei das Verfahren dadurch gekennzeichnet ist, daß der Echo-Abdruck der folgenden Beziehung entspricht:

$$q_n = \sum_{l=-L}^{L} a_{n-\hat{K}-l}\, \hat{h}_l \exp j\, \hat{\psi}_n,$$

wo

das Zeichen »ˆ« auf geschätzte Werte hinweist,

L  ein ganzzahliger vorbestimmter Wert ist,
j  $= \sqrt{-1}$,
$h_l$  einen der folgenden Beziehung entsprechenden Koeffizient darstellt:

$$\hat{h}_{l(n+1)} = \hat{h}_{l(n)} + \lambda_h\, \varepsilon_n \exp -j\, \hat{\psi}_n\, \hat{a}_{n-\hat{K}-l},$$

wo

$\lambda_h$  ein numerischer vorbestimmter Koeffizient ist,
$\varepsilon_n$  den in den Zeitpunkt nT abgenommenen Wert des Fehlers bezüglich der Datensymbole darstellt, wo dieser Fehler auf das hörseitige Echo zurückzuführen ist; und

wo

$\hat{\psi}_n$  die diskreten in den Zeitpunkten nT durch den Phasenschub $\psi$ abgenommenen Werte darstellt, wo der Phasenschub von der iterativen Berechnung gemäß der folgenden Beziehung erfolgt:

$$\hat{\psi}_{(n+1)} = \hat{\psi}_n + \lambda_\psi\, \mathrm{Im}\, q_n^* \exp -j\, \hat{\psi}_n$$

wo

$\lambda_\psi$  ein numerischer vorbestimmter Koeffizient ist,
Im  darauf hinweist, daß nur der imaginäre Teil der folgenden komplexen Quantität in Rücksicht genommen ist,
*  bedeutet, daß die komplexe Quantität zusammen mit der berücksichtigten Quantität verarbeitet ist.

2. Numerisches Verfahren zur Unterdrückung des hörseitigen Echos nach Anspruch 1, dadurch gekennzeichnet, daß die Generierung der diskreten Werte $q_n$ für das hörseitige Echo unter Anwendung der Techniken des numerischen komplexen Ausgleichs durchgeführt ist.

3. Einrichtung zur Unterdrückung des hörseitigen Echos bei einem Hörempfänger für als numerische Datensymbole $a_n$ in regelmäßigen Zeitabständen T übertragene Daten unter Anwendung der »Zweiseitenband-Modulation mit Quadraturträger« genannten Modulationstechniken, wobei der Hörempfänger Mittel zum Abtasten und zum numerischen Kodieren (A/D, I) des empfangenen Signals, mit dem Abtastmittel verbundene Mittel zum komplexen Filtern (H), das das kodierte empfangene Signal in eine normale Komponente und eine Komponente mit einer Phasenverschiebung um 90° spaltet, mit dem Mittel zum komplexen Filtern verbundene Mittel zur Demodulation (DEM), erste Mittel zum Ausgleich und zur Korrektur des demodulierten Signals in der gleichen Phase und sogenannte Entscheidungsmittel (DEC) einschließt, wo diese Entscheidungsmittel dasjenige Signal verarbeiten, das den ersten Ausgleichschritt erfahren hat, um davon die numerischen empfangenen Symbole abzuleiten, wobei die Einrichtung zur Unterdrückung des hörseitigen Echos dazu bezweckt ist, die Einwirkungen einer parasitären, »hörseitigem Echo« genannten Welle zu unterdrücken, die im Vergleich zu der normalen empfangenen Welle eine Verzögerung und eine Phasendrehung aufweist, wobei die Einrichtung zur Unterdrückung des hörseitigen Echos folgendes einschließt:
Mittel zur Schätzung der Gesamtverzögerung KT (CALC ($\hat{K}$T)) der normalen Welle gegenüber der Welle des hörseitigen Echos, wobei diese Schätzungsmittel mit den ersten Ausgleichsmitteln verbunden sind;
Gesamtverzögerung-Schaltungen (KT), die mit den Entscheidungsmitteln verbunden und mittels der Schätzungsmittel für die Gesamtverzögerung eingestellt sind;
Mittel zur Generierung von Abtastwerten $q_n$ eines numerischen Abdrucks q des hörseitigen Echos (EQ2, ROT $\hat{\psi}_n$), die mit den Gesamtverzögerung-Schaltungen verbunden sind;
Subtrahiermittel, die mit den vorhergehenden Generierungsmitteln verbunden sind, um den Echo-Abdruck des am Eingang der Entscheidungsmittel anliegenden Signals zu subtrahieren;
wobei die Einrichtung zur Echo-Unterdrückung weiterhin dadurch gekennzeichnet ist, daß sie dazu
Nachlaufmittel für die Echo-Phase (CALC $\hat{\psi}_n$) einschließt, die mit den Entscheidungsmitteln verbunden und dazu bezweckt sind, die Rotation der Phase $\psi$ der von den Entscheidungsmitteln ermittelten Datensymbole zu messen, und daß die Mittel zur Generierung des Echo-Abdrucks ein zweites Ausgleichsmittel (EQ.2) der Koeffizienten $h_l$ und Schaltungen zur Drehung der Echo-Phase (ROT $\hat{\psi}_n$) aufweisen, so daß der Echo-Abdruck der folgenden Beziehung entspricht:

$$q_n = \sum_{l=-L}^{L} a_{n-\hat{K}-l} \, \hat{h}_l \, \exp j \, \hat{\psi}_n,$$

wo

das Zeichen » ˆ « auf geschätzte Werte hinweist,

$j \quad = \sqrt{-1},$

L ein ganzzahliger vorbestimmter Wert ist,

$\hat{h}_l$ den Wert des Koeffizienten des Ranges l bei den zweiten Ausgleicher, auch Echo-Ausgleicher genannt, darstellt, wobei dieser Wert gemäß der folgenden Beziehung in dem Zeitpunkt nT geschätzt ist:

$$\hat{h}_{l(n+1)} = \hat{h}_{l(n)} + \lambda_h \, \varepsilon_n \, \exp -j \, \hat{\psi}_n \, \hat{a}_{n-\hat{K}-l}$$

wo

$\lambda_h$ ein numerischer vorbestimmter Koeffizient ist,

$\varepsilon_n$ den in dem Zeitpunkt nT abgenommenen Wert des Fehlers bezüglich der Datensymbole darstellt, wo dieser Fehler auf das hörseitige Echo zurückzuführen ist, und

$\hat{\psi}_n$ den Wert des Phasenschubs darstellt, der von den Datensymbolen wegen des hörseitigen Echos erfahren wurde, wobei dieser Wert in dem Zeitpunkt nT gemessen ist und der folgenden Beziehung entspricht:

$$\hat{\psi}_{(n+1)} = \hat{\psi}_n + \lambda_\psi \, \text{Im} \, q_n^* \, \exp -j \, \hat{\psi}_n$$

wo

$\lambda_\psi$ ein numerischer vorbestimmter Koeffizient ist,

Im darauf hinweist, daß nur der imaginäre Teil der folgenden komplexen Quantität in Rücksicht genommen ist, und

* bedeutet, daß die komplexe Quantität zusammen mit der berücksichtigten Quantität verarbeitet ist.

4. Verfahren zur Initialisierung der Unterdrückung des hörseitigen Echos, wo das Verfahren die Einrichtung gemäß Anspruch 3 anwendet, und dadurch gekennzeichnet ist, daß es folgende Schritte aufweist:

Empfang einer Folge von als Versuch geltenden Datensymbolen, die dazu bezweckt ist, den ersten Ausgleicher einzustellen, nachdem die Einrichtung zur Unterdrückung des hörseitigen Echos abgeschaltet wurde,

Einschaltung der Einrichtung des hörseitigen Echos, wo die Koeffizienten des zweiten Ausgleichers auf Ausgangswert Null gesetzt sind,

Messung der Gesamtverzögerung KT bei Empfang von weiteren der Versuchsfolge von Datensymbolen folgenden Datensymbolen,

Einstellung der Gesamtverzögerung-Schaltung auf dem gemessenen Wert KT, und

Einstellung des zweiten Ausgleichers und der Schaltung der Echo-Phase-Drehung ab der genannten Versuchsfolge von Datensymbolen.

5. Verfahren zur Initialisierung der Einrichtung zur Unterdrückung des hörseitigen Echos nach Anspruch 4, dadurch gekennzeichnet, daß die Messung der Gesamtverzögerung KT die folgenden Schritte aufweist:

Berechnung der Ausdrücke $g_l$, die von der folgenden Beziehung bestimmt sind:

$$g_{l(n+1)} = (1-\lambda) \, g_{l(n)} + \lambda \, \text{Re} \, [e_n \, e_{n-1}^* \, a_{n-N-l}^* \, a_{n-N-l-1}]$$

mit l = 0, 1, 2, ..., $M_o$, ..., M, wo M als eine ganzzahlige vorbestimmte Zahl ist,

wo

$\lambda$ ein vorbestimmter Koeffizient ist,

Re darauf hinweist, daß nur der reelle Teil des folgenden Ausdrucks in Rücksicht genommen ist,

13

**0 073 869**

$e_n$ der in dem Zeitpunkt nT abgenommenen Wert des Fehlers ist, der den Abstand zwischen dem durch den ersten Ausgleicher ausgeglichenen Signal und dem ermittelten Datensymbol $a_n$ darstellt,

* darauf hinweist, daß die komplexe Quantität zusammen mit der dieses Zeichen aufweisenden Quantität verarbeitet ist,

Lokalisierung der Stellung des größten Ausdrucks $g_{Mo}$ aus den berechneten Ausdrücken $g_l$, und Berechnung der Quantität:

$$K = N + M_o + 1$$

wo

N der Wert ist, der in Abhängigkeit von den Eigenschaften der ersten Ausgleicher vorbestimmt ist.

6. Verfahren zur Initialisierung der Einrichtung zur Unterdrückung des Echos nach Anspruch 5, dadurch gekennzeichnet, daß die Einstellung des zweiten Ausgleichers folgende Schritte aufweist: Positionierung des zentralen Koeffizienten des zweiten Ausgleichers bei der $K^{ten}$ Zelle der Verzögerungsleitung, die auf dem Übertragungsweg der ermittelten Datensymbole angeordnet ist, und Einstellung der Koeffizienten $\hat{h}_l$ des zweiten Ausgleichers dem folgenden Ausdruck entsprechend:

$$\hat{h}_{l(n+1)} = \hat{h}_{l(n)} + \lambda_h \, \varepsilon_n \, \exp -j \, \hat{\psi}_n \, a_{n-\hat{K}-l}$$

wo

$\lambda_h$ ein numerischer vorbestimmter Koeffizient ist,

$a_{n-\hat{K}-l}$ der Wert des in dem Zeitpunkt $(n-\hat{K}-l)\,T$ ermittelten Datensymbole ist,

$\hat{\psi}_n$ den geschätzten Phasenschub, den die Datensymbole in dem Zeitpunkt nT erfahren hat, und der auf das hörseitige Echo zurückzuführen ist, und

$\varepsilon_n$ den in dem Zeitpunkt nT abgenommenen Wert des Fehlers bezüglich der Datensymbole darstellt, wo dieser Fehler auf das hörseitige Echo zurückzuführen ist.

**Claims**

1. A method of cancelling listener echo in a digital data receiver in charge of detecting data symbols $a_n$ transmitted at regular intervals T by making use of the so-called double side-band quadrature modulated wave modulation techniques, said listener echo occuring at the input of said receiver in the form of a delayed parasitic wave and exhibiting a phase shift $\psi$ variable with respect to the wave normally received without listener echo, said method including:
estimating the bulk delay $\hat{K}T$ (see CALC (KT)) between the normal and parasitic waves;
introducing an equivalent delay (KT figure 3) to said estimated global delay on the path of the data detected by said receiver;
generating discrete values $q_n$ of a listener echo replica »q« defined at time instants nT, from the delayed detected data symbols of said global delay; and
subtracting (124) said listener echo replica from the wave received before detection, said method being characterized in that said listener echo replica meets the relationship:

$$q_n = \sum_{l=-L}^{L} a_{n-\hat{K}-l} \, \hat{h}_l \, \exp j \, \hat{\psi}_n ,$$

wherein:

the sign »^« is meant »estimated value of«;

L is a predetermined integer value;
j $= \sqrt{-1}$,
$h_l$ is representative of a coefficient such that:

$$\hat{h}_{l(n+1)} = \hat{h}_{l(n)} + \lambda_h \, \varepsilon_n \, \exp -j \, \hat{\psi}_n \, \hat{a}_{n-\hat{K}-l} ,$$

with

$\lambda_h$ being a predetermined numerical coefficient; and

14

$\varepsilon_n$ being representative of the echo error value at time nT, which error is caused by the listener echo; and

$\hat{\psi}_n$ being representative of the discrete values assumed at times nT by phase shift $\psi$ and which is operated by iterative calculation such that:

$$\hat{\psi}_{(n+1)} = \hat{\psi}_n + \lambda_{\psi} \text{ Im } q_n^* \exp -j \; \hat{\psi}_n$$

wherein

$\lambda_{\psi}$ is a predetermined numerical coefficient;

Im is representative of the imaginary portion of the following complex expression;

* is used to designate complex conjugate expression.

2. A method of cancelling listener echo according to claim 1, characterized in that said generation of discrete values $q_n$ of the listener echo is performed according to complex digital aqualization techniques.

3. A device for cancelling listener echo in a numerical data receiver wherein data are transmitted at regular intervals T in the form of digital data symbols $a_n$, making use of the so-called double side-band quadrature modulated wave techniques, said receiver including sampling and coding means (A/D, I) for digitally sampling and coding the received signal; complex filtering means (H) connected to said sampling means and splitting the coded received signal into a normal component and a quadrature component; demodulating means (DEM) connected to said complex filtering means; first equalizing (EQ 1, 13) and phase correcting means for equalizing and correcting the demodulated signal; and so-called decision means (DEC) processing the signal exhibiting said first equalization in order to derive therefrom the digital received symbols, said listener echo suppressor being used to remove the effects of the so-called listener echo parasitic wave being delayed and phase-rotated with respect to the normally received wave, said listener echo suppressor including:

bulk delay estimating means (KT) (CALC ($\hat{K}$T)) between the normal wave and the listener echo wave, said means being connected to said first equalizing means:

bulk delaying circuits (KT) connected to said decision means and adjusted by said bulk delay estimating means;

sample generating means for generation samples $q_n$ of a digital replica q of the listener echo (EQ 2, ROT $\hat{\psi}_n$), connected to said global delaying circuits;

subtracting means connected to said echo replica generating means for subtracting said echo replica from the signal occuring at the input of said decision means;

said echo suppressor being further characterized in that it includes echo phase tracking means (CALC $\hat{\psi}_n$) connected to said decision means and used to measure the phase shift $\psi$ which the data symbols detected by the decision means, are subjet to, and in that said replica generating means include a second equalizing means (EQ 2) of coefficients $h_l$ and echo phase shift circuits (ROT $\hat{\psi}_n$), the echo replica being defined by

$$q_n = \sum_{l=-L}^{L} a_{n-\hat{K}-l} \; \hat{h}_l \exp j \; \hat{\psi}_n,$$

where

sign »^« is meant for »estimated value of«;

$j \quad = \sqrt{-1}$

L is a predetermined integer value;

$\hat{h}_l$ is the value of the ranked coefficient l of said second equalizing means, also so-called echo equalizer, a value estimated at instant nT according to the expression

$$\hat{h}_{l(n+1)} = \hat{h}_{l(n)} + \lambda_h \; \varepsilon_n \exp -j \; \hat{\psi}_n \; \hat{a}_{n-\hat{K}-l}$$

wherein:

$\lambda_h$ is a predetermined digital coefficient; and

$\varepsilon_n$ is representative of the value at instant nT of the error on the error on the data symbols, an error caused by the listener echo; and

$\hat{\psi}_n$ is representative of the value of the phase shift which the data symbols are subject to, because of the listener echo, a value which is measured at instant nT and meeting the relationship

$$\hat{\psi}_{(n+1)} = \hat{\psi}_n + \lambda_{\psi} \text{ Im } q_n^* \exp -j \; \hat{\psi}_n$$

15

where

$\lambda_{\psi}$  is a predetermined digital coefficient;

Im   is indicative that only the imaginary portion of the following complex quantity, is considered; and *   is used to designate the complexe conjugate expression.

4. A process of initializing the listener echo suppressor, making use of the device according to claim 3, and caracterized in that it includes the following operations:

receiving a training data symbols sequence for adjusting said first equalizer after deconnection of the listener echo suppressor,

connecting the listener echo suppressor with setting the coefficients of said second equalizer, to zero

measuring the global delay KT upon reception of said training data symbol sequence following;

addjusting of the global delay circuit to measured value KT; and

adjusting of said second equalizer as well as the echo phase shift circuit from said training data symbol sequence.

5. A process of initializing the listener echo suppressor according to claim 4, characterized in that said global delay measurement KT includes the following operations:

determining terms g defined by:

$$g_{l(n+1)} = (1-\lambda)\, g_{l(n)} + \lambda\, \text{Re}\, [e_n\, e^*_{n-1}\, a^*_{n-N-l}\, a_{n-N-l-1}]$$

for $l = 0, 1, 2, \ldots, M_o, \ldots, M_M$,

where M is a predertermined integer; and

where

$\lambda$   is a predetermined coefficient

Re   is representative that only the real portion of the following expression, is considered;

$e_n$   is the value at instant nT of the error representative of the difference between the signal equalized by said first equalizer and the detected data symbol $a_n$;

*   is used to designate the complex conjugate expression

locating the larget $g_{MO}$ term from amongst the determined $g_l$ terms; and

determining quantity

$$K = N + M_o + 1$$

where

N   is a value predetermined in terms of the characteristics of said first equalization means.

6. A process of initializing the listener echo suppressor according to claim 5, characterized in that said adjustement of the second equalizer includes the following operations:

positioning the central coefficient of said second equalizer to the $k$:[th] cell of the delay line placed on the path of the detected data symbols: and adjusting coefficients $\hat{h}_l$ of said second equalizer according to the expression:

$$\hat{h}_{l(n+1)} = \hat{h}_{l(n)} + \lambda_h\, \varepsilon_n\, \exp -j\, \hat{\psi}_n\, a_{n-\hat{K}-l}$$

where

$\lambda_h$   is a predetermined digital coefficient;

$\hat{a}_{n-\hat{K}-l}$ is the value of the data symbol detected at instant $(n-\hat{K}-l)\,T$;

$\hat{\psi}_n$   is the data symbol phase shift which the data symbols are subjet to, at instant nT, because of the listener echo; and

$\varepsilon_n$   is representative of the echo error value estimated at time nT, which error is caused by the listener echo.

FIG. 1A

FIG. 1B

0 073 869

FIG. 2

FIG. 3

FIG.4

FIG.5

FIG. 6

FIG. 7

FIG. 8